# EUROPEAN PATENT APPLICATION

(11) **EP 2 105 525 A1**
(43) Date of publication of application: **30.09.2009**
(21) Application number: 07831985.2
(22) Date of filing: 16.11.2007
(51) Int. Cl.: D04B 21/16, A47C 7/28

(54) **SHEET MATERIAL**

(30) Priority: 17.11.2006 JP 2006337606
(71) Applicant: Hokuriku S.T.R Cooperative, Oyabe-shi Toyama 932-0121 (JP)
(72) Inventor: YAMAGUCHI, Tetsuo, Toyama 932-0121 (JP); KONTANI, Naoaki, Toyama 932-0121 (JP)
(74) Representative: HOFFMANN EITLE
(86) International application number: PCT/JP2007/072255
(87) International publication number: WO 2008/059947

(57) **Abstract**

A sheet material consisting of a three-dimensional knitted fabric is disclosed. The three-dimensional knitted fabric includes: a surface ground weave having a napped open-lap knit texture; a backside ground weave having an open-lap knit texture; and a connecting yarn connecting the surface ground weave to the backside ground weave.

## Description

### Technical Field

The present invention relates to a sheet material having a three-dimensional knitted fabric used as a cushioned supporting surface for a seating face and a backrest surface of a vehicle seat and a furniture chair for example.

### Background Art

A seating face and a backrest in a conventional seat structure are configured to include therein a pad made of polyurethane foam or the like in order to flexibly support the body of a user, and the pad is covered by a knitted fabric. In recent years, a double-type warp-knitted fabric has been proposed as another knitted fabric. The double-type warp-knitted fabric does not require the pad made of polyurethane foam or the like and provides a flexible supporting property by itself. The double-type warp-knitted fabric is a three-dimensional knitted fabric composed of a surface ground weave and a backside ground weave and connecting yarns connecting them.
The double-type warp-knitted fabric can be manufactured by a known Double Raschel machine. The surface ground weave is generally subjected a napping (raising) processing from the aesthetic viewpoint and the nap is caused to externally expand. A related technique is disclosed in Japanese Patent Publication No. 3136342.

### Disclosure of the Invention

The three-dimensional knitted fabric as described above is repeatedly deformed in the thickness direction and the shearing direction. Thus, a knit texture of the three-dimensional knitted fabric must be configured to maintain the stability of the shape of three-dimensional knitted fabric with regard to the connecting yarns in particular. On the other hand, lapping by the connecting yarns to the surface ground weave has a significant influence on the hook of the fabric by a napping means such as a napping needle during a napping processing. Depending on a lapping direction, the napping may be locally disturbed or disordered. Specifically, such a knit texture that only focuses on the stability of the shape has a risk where the nap is consequently nonuniform.

The present invention has been made in view of the above-described disadvantage. It is an objective of the present invention to provide a sheet material that has a knit texture having both of a stable shape and a uniform nap and that can be manufactured by a known Double Raschel machine.

According to one aspect of the present invention, a sheet material comprises a three-dimensional knitted fabric. The three-dimensional knitted fabric includes: a surface ground weave having a napped open-lap knit texture; a backside ground weave having an open-lap knit texture; and a connecting yarn connecting the surface ground weave to the backside ground weave.

Preferably, the three-dimensional knitted fabric is manufactured by a Double Raschel machine having, with regard to a knitting needle, a 0th position to a 7th position for guide. Preferably, the surface ground weave includes: an outermost knit texture obtained by: overlapping a first ground yarn from the 3rd position to the 2nd position, from the 4th position to the 3rd position, or from the 5th position to the 4th position; subsequently swinging out the first ground yarn to underlap the first ground yarn to the 0th position; subsequently overlapping the first ground yarn from the 0th position to the 1st position; and subsequently swinging out the first ground yarn to underlap the first ground yarn to the 4th position; and a second outermost knit texture obtained by: overlapping a second ground yarn from the 0th position to the 1st position; subsequently swinging out the second ground yarn to underlap the second ground yarn to the 2nd position; subsequently overlapping the second ground yarn from the 2nd position to the 1st position; and subsequently underlapping the second ground yarn to the 0th position. Preferably, the connecting yarn has a knit texture obtained by: overlapping the connecting yarn from the 4th position to the 5th position; subsequently swinging out the connecting yarn to underlap the connecting yarn from the 5th position to the 1st position; subsequently overlapping the connecting yarn from the 1st position to the 0th position; subsequently underlapping the connecting yarn from the 0th position to the 3rd position; subsequently overlapping the connecting yarn from the 3rd position to the 2nd position; subsequently swinging out the connecting yarn to underlap the connecting yarn from the 2nd position to the 6th position; subsequently overlapping the connecting yarn from the 6th position to the 7th position; and subsequently swinging out the connecting yarn to underlap the connecting yarn from the 7th position to the 4th position.

Preferably, the connecting yarn is knitted to have a loop with the surface ground weave and the backside ground weave by: overlapping the connecting yarn in an opposite direction to a ground yarn constituting the outermost knit texture of the surface ground weave, underlapping the connecting yarn in the same direction thereto, overlapping the connecting yarn in the same direction to a ground yarn constituting the knit texture at the second side of the surface ground weave from the outer side, and underlapping the connecting yarn in an opposite direction thereto, the connecting yarn being knitted by two needle spaces or more.

Preferably, the connecting yarn is composed of monofilament made of any one of polyamide, polytrimethylene terephthalate, and polyester.

### Brief Description of the Drawings

Fig. 1 is a side view illustrating the main part of a Double Raschel machine for manufacturing a sheet material according to an illustrative embodiment of the present invention.
Fig. 2 illustrates the knit texture of the sheet material.
Fig. 3 illustrates the knit texture of the sheet material showing the status of a plurality of ground yarns in a superposed manner.

### Best Mode for Carrying Out the Invention

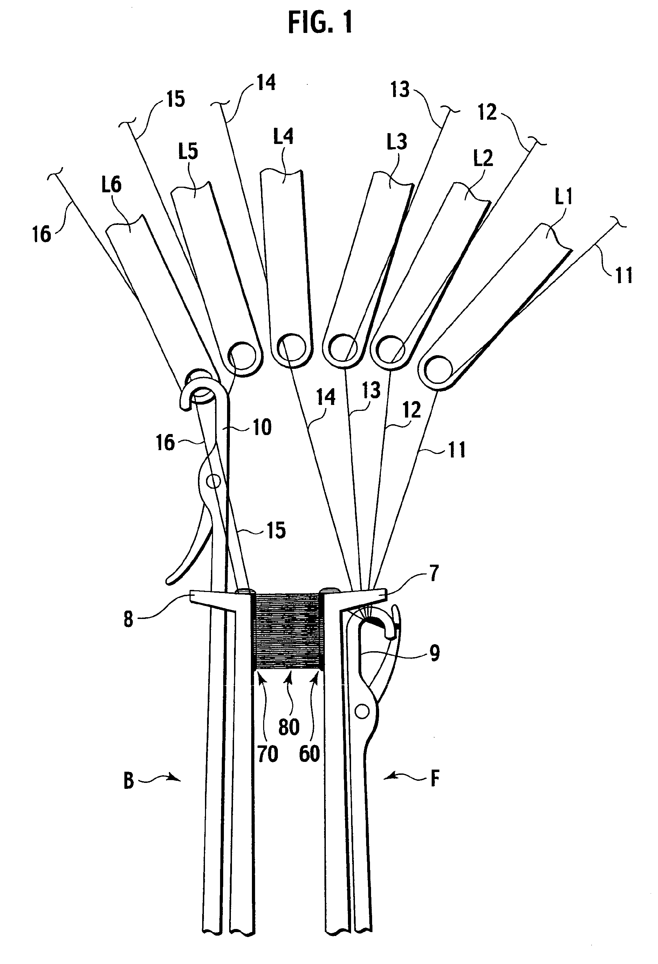

With reference to Fig. 1 to Fig. 3, an illustrative embodiment of the present invention will be described below.

This embodiment can be carried out by a known Double Raschel machine as shown in Fig. 1. The Double Raschel machine illustrated in Fig. 1 includes: front and rear needle kettles 7 and 8; knitting needles 9 and 10 constituting front and rear columns F and B; and a plurality of guides L1 to L6 for guiding ground yarn 11 to 16. The respective guides L1 to L6 can guide yarns by being moved from the position number 0 as a starting point to the positions of the position numbers 0, 1, 2, 3, 4, 5, 6, and 7. By the move, the guides L1 to L6 can cooperate with the knitting needles to knit yarns into a knit texture.

The sheet material according to this embodiment is a three-dimensional knitted fabric and has a surface ground weave 60; a backside ground weave 70; and a connecting yarn 80 connecting the surface ground weave 60 to the backside ground weave 70. The connecting yarn 80 has an open-lap (open loop) knit texture to the surface ground weave 60 and the backside ground weave 70. The surface ground weave is subjected to a napping processing to externally expand the nap.

The ground yarns 11 and 12 forming the surface ground weave 60 are sent through the guides L1 and L2. The ground yarns 15 and 16 forming backside ground weave 70 are sent through the guides L5 and L6. The ground yarns 13 and 14 functioning as the connecting yarns 80 connecting the surface ground weave 60 to the backside ground weave 70 are sent through the guides L3 and L4.

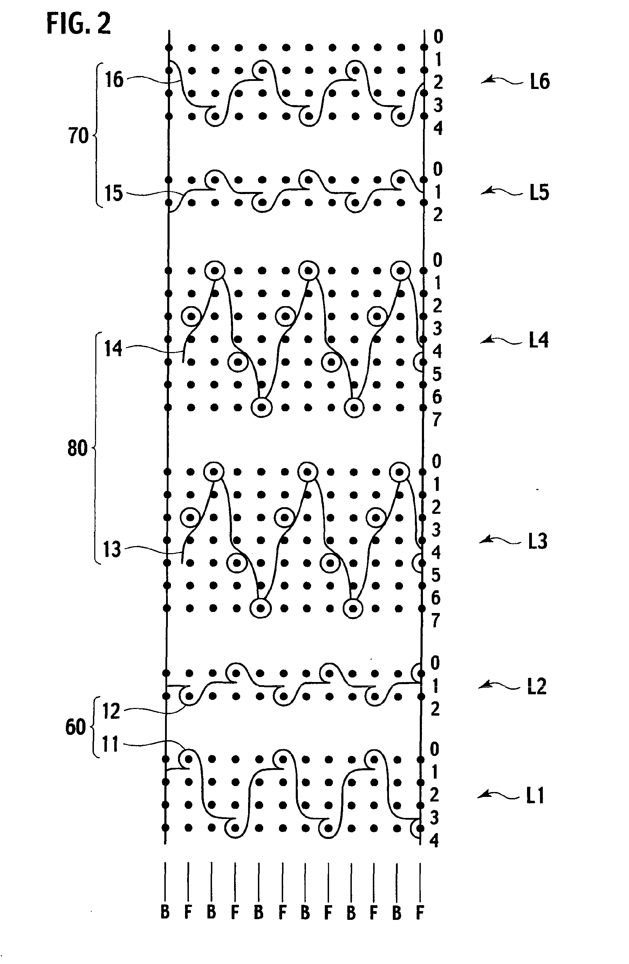

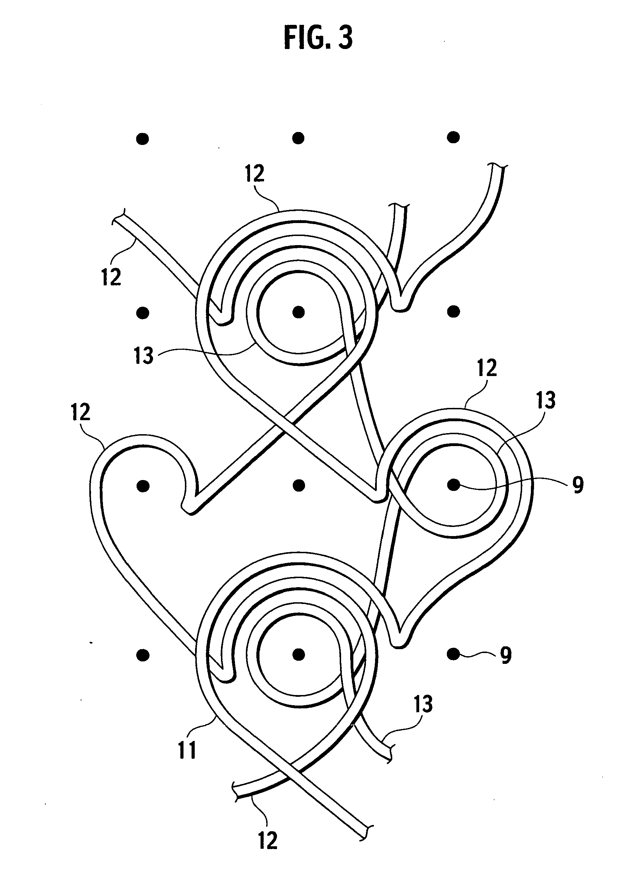

Fig. 2 shows the three-dimensional knitted fabric in a conventional manner of representing a knit texture. Fig. 3 is a partial expanded view of Fig. 2. In Figs. 2 and 3, the black points represent the positions of the respective knitting needles 9 and 10 and the numbers 0 to 7 represent the position numbers of the knitting needles. F and B represent the knitting needle columns F and B, respectively.

With reference to the lower part of Fig. 2 from right to left, the ground yarn 11 is overlapped with regard to the front knitting needle column F by the guide L1 from the position number 4 to the position number 3 and is then swung out (swung back) and is underlapped to the position number 0. Then, the ground yarn 11 is overlapped from the position number 0 to the position number 1 and is swung out and is underlapped to the position number 4. This process is assumed as one cycle. By repeating the cycle, the ground yarn 11 is knitted to form the outermost open-lap knit texture in the surface ground weave 60. It is noted that, instead of overlapping the ground yarn 11 from the position number 4 to the position number 3, the ground yarn 11 also may be knitted by being overlapped from the position number 3 to the position number 2 or from the position number 5 to the position number 4.

The ground yarn 12 is overlapped with regard to the knitting needle column F by the guide L2 from the position number 0 to the position number 1 and is swung out and is underlapped to the position number 2. Then, the ground yarn 12 is overlapped from the position number 2 to the position number 1 and is swung out and is underlapped to the position number 0. This process is assumed as one cycle. By repeating the cycle, the ground yarn 12 is knitted to form a second outermost open-lap knit texture in the surface ground weave 60.

With reference to the middle part of Fig. 2 from right to left, the ground yarns 13 and 14 are respectively overlapped by the guides L3 and L4 from the position number 4 to the position number 5 and are swung out and are underlapped from the position number 5 to the position number 1. Then, the ground yarns 13 and 14 are overlapped from the position number 1 to the position number 0, underlapped from the position number 0 to the position number 3, and are overlapped from the position number 3 to the position number 2. Then, the ground yarns 13 and 14 are swung out and are underlapped from the position number 2 to the position number 6, overlapped from the position number 6 to the position number 7 and are swung out and are underlapped from the position number 7 to the position number 4. This process is assumed as one cycle. By repeating the cycle, the ground yarns 13 and 14 respectively form a closed-lap knit texture and function as the connecting yarns 80 connecting the surface ground weave 60 to the backside ground weave 70.

With reference to the upper part of Fig. 2 from right to left, the ground yarn 15 is overlapped with regard to the rear knitting needle column B by the guide L5 from the position number 0 to the position number 1. Then, the ground yarn 15 is swung out and is underlapped to the position number 2 and is overlapped from the position number 2 to the position number 1. Thereafter, the ground yarn 15 is swung out and is underlapped to the position number 0. This process is assumed as one cycle. By repeating the cycle, the ground yarn 15 is knitted to form a second outermost open-lap knit in the backside ground weave 70.

The ground yarn 16 is overlapped with regard to the rear knitting needle column B by the guide L6 from the position number 3 to the position number 2 and is swung out and is underlapped to the position number 0. Then, the ground yarn 16 is overlapped from the position number 0 to the position number 1 and is swung out and is underlapped to the position number 3. This process is assumed as one cycle. By repeating the cycle, the ground yarn 16 is knitted to form an outermost open-lap knit texture in the backside ground weave 70.

The three-dimensional knitted fabric knitted by the above-described procedure is subjected to a known napping processing in order to expand the nap from the surface ground weave 60.

As will be understood from the above, any of the surface ground weave 60 and the backside ground weave 70 including the ground yarns 11, 12, 15, and 16 has an open-lap knit texture. In the surface ground weave 60, when the second outermost ground yarn 12 is overlapped from the position number 0 to the position number 1, the ground yarn 13 constituting the connecting yarns 80 is overlapped from the position number 4 to the position number 5. Specifically, the ground yarn 12 and the ground yarn 13 are introduced in the same direction and thus the ground yarn 12 is hidden under the back side of the ground yarn 13. Further, when the outermost ground yarn 11 in the surface ground weave 60 is overlapped from the position number 4 to the position number 3, the ground yarn 11 is in an opposite direction to the ground yarn 12 and thus is exposed at the surface of the surface ground weave 60. Thus, the ground yarn 12 is prevented from being extruded from the ground yarn 11.

Any of the connecting yarns 13 and 14 is knitted to have loops with the surface ground weave 60 and the backside ground weave 70. The connecting yarns 13 and 14 are overlapped, with regard to the ground yarn 11 constituting the outermost knit texture in the surface ground weave 60, in the opposite direction, while being underlapped in the same direction. Thus, the connecting yarns 13 and 14 are prevented from being extruded from the ground yarn 11. Since the connecting yarns 13 and 14 are both formed by two needle spaces or more, the connecting yarns 13 and 14 are easily fallen and contribute to the cushioning property of the three-dimensional knitted fabric.

Specifically, any of the ground yarn 11 as well as the connecting yarns 13 and 14 is prevented from being extruded from the ground yarn 11 and thus is prevented from being hooked by the napping means. Since the ground yarn 11 is always exposed at the surface of the surface ground weave 60, a uniform napping can be achieved.

Any of the ground yarns 11, 12, 13, 14, 15, and 16 may be an appropriate yarn and is not limited. However, the ground yarns 11, 12, 13, 14, 15, and 16 may be made of natural fibers such as cotton or synthetic fibers such as the nylon-base, aramid-base, polyester-base, or polyacryl-base ones. The ground yarns 11, 12, 15, and 16 constituting the surface ground weave 60 and the backside ground weave 70 are preferably made of polyester-base fibers. However, the ground yarns 13 and 14 functioning as the connecting yarns 80 may be made of fibers having superior strength and elastic recovery. The fibers as described above illustratively include, for example, aromatic polyamide or polytrimethylene terephthalate fibers.
Any of these fibers can be used as monofilament yarns, multi filament yarns, or bundled yarns. However, the use of these fibers as monofilament is advantageous from the viewpoints of strength and elastic recovery. The ground yarns 11, 12, 15, and 16 may also be monofilament yarns, multi filament yarns, or bundled yarns. However, the use of these fibers as multi filament yarns or bundled yearns is advantageous in a napping process.and reduces the deterioration of the knitted fabric face. In particular, the bundling as many monofilaments as possible is advantageous from the viewpoints of the cushioning property and the spring property. These yarns may have any thickness. However, from the aesthetic viewpoint of the napped surface, these yarns have the thickness preferably in a range from 120 to 200 denier and more preferably has the thickness of about 150 denier.

In consideration of the convenience for the napping process of the surface ground weave 60 using the guide L1 in particular, the tensile force applied to ground yarns in order to knit the ground yarns is preferably set as low as possible.
Furthermore, it is preferred to feed yarns in an amount larger than the general yarn amount. Specifically, it is advantageous that the mass per unit area is 1000g/m² or more and is preferably about 1250g/m². However, the weight of the surface (napped face) corresponding to two beams is about 300g/m² and is more preferably about 150g/m².

The knitted three-dimensional knitted fabric is required to have a thickness equal to or higher than a certain value from the viewpoints of the cushioning property and elasticity.
However, an excessive thickness hinders the economical efficiency. Thus, the thickness is preferably about 3 to 10mm and is more preferably about 5 to 8mm.

Although the present invention has been described by way of a preferred embodiment, the present invention is not limited to the above embodiment. Based on the above disclosure, those having ordinary skills in the art can carry out the present invention by the change or modification of the embodiment.

### Industrial Applicability

A sheet material is provided that has a knit texture capable of achieving both of the stability of the shape and the uniformity of nap, that can be manufactured by a known Double Raschel machine, and that can be preferably used for a seating face and a backrest surface of a vehicle seat, a furniture chair and the like.

## Claims

1. A sheet material comprising:
a three-dimensional knitted fabric;
wherein the three-dimensional knitted fabric includes:
a surface ground weave having a napped open-lap knit texture;
a backside ground weave having an open-lap knit texture; and
a connecting yarn connecting the surface ground weave to the backside ground weave.

2. The sheet material according to claim 1, wherein
the three-dimensional knitted fabric is manufactured by a Double Raschel machine having, with regard to a knitting needle, a 0th position to a 7th position for guide,
the surface ground weave includes:
an outermost knit texture obtained by: overlapping a first ground yarn from the 3rd position to the 2nd position, from the 4th position to the 3rd position, or from the 5th position to the 4th position; subsequently swinging out the first ground yarn to underlap the first ground yarn to the 0th position; subsequently overlapping the first ground yarn from the 0th position to the 1st position; and subsequently swinging out the first ground yarn to underlap the first ground yarn to the 4th position; and
a second outermost knit texture obtained by: overlapping a second ground yarn from the 0th position to the 1st position; subsequently swinging out the second ground yarn to underlap the second ground yarn to the 2nd position; subsequently overlapping the second ground yarn from the 2nd position to the 1st position; and subsequently underlapping the second ground yarn to the 0th position; and
the connecting yarn has a knit texture obtained by: overlapping the connecting yarn from the 4th position to the 5th position; subsequently swinging out the connecting yarn to underlap the connecting yarn from the 5th position to the 1st position; subsequently overlapping the connecting yarn from the 1st position to the 0th position; subsequently underlapping the connecting yarn from the 0th position to the 3rd position; subsequently overlapping the connecting yarn from the 3rd position to the 2nd position; subsequently swinging out the connecting yarn to underlap the connecting yarn from the 2nd position to the 6th position; subsequently overlapping the connecting yarn from the 6th position to the 7th position; and subsequently swinging out the connecting yarn to underlap the connecting yarn from the 7th position to the 4th position.

3. The sheet material according to claim 1, wherein
the connecting yarn is knitted to have a loop with the surface ground weave and the backside ground weave by:
overlapping the connecting yarn in an opposite direction to a ground yarn constituting the outermost knit texture of the surface ground weave, underlapping the connecting yarn in the same direction thereto, overlapping the connecting yarn in the same direction to a ground yarn constituting the knit texture at the second side of the surface ground weave from the outer side, and underlapping the connecting yarn in an opposite direction thereto, the connecting yarn being knitted by two needle spaces or more.

4. The sheet material according to claim 1, wherein:
the connecting yarn is composed of monofilament made of any one of polyamide, polytrimethylene terephthalate, and polyester.
